# EUROPÄISCHE PATENTSCHRIFT

(11) **EP 1 891 399 B1**
(45) Veröffentlichungstag und Bekanntmachung des Hinweises auf die Patenterteilung: **01.10.2008**
(21) Anmeldenummer: 06753665.6
(22) Anmeldetag: 17.05.2006
(51) Int. Cl.: G01D 18/00, G01D 5/244

(54) **VERFAHREN ZUM BESTIMMEN VON KORREKTURWERTEN ZUM KORRIGIEREN VON POSITIONSMESSFEHLERN BEI EINER MASCHINE MIT ZUMINDEST EINER TRANSLATORISCHEN BEWEGUNGSACHSE**
METHOD FOR DETERMINING CORRECTION VALUES FOR CORRECTING POSITIONAL MEASURING ERRORS IN A MACHINE COMPRISING AT LEAST ONE TRANSLATORY DISPLACEMENT AXIS
PROCEDE POUR DETERMINER DES VALEURS DE CORRECTION PERMETTANT DE CORRIGER DES ERREURS DE MESURE DE POSITION SUR UNE MACHINE POURVUE D'AU MOINS UN AXE DE TRANSLATION

(30) Priorität: 16.06.2005 DE 102005028788
(43) Veröffentlichungstag der Anmeldung: 27.02.2008
(73) Patentinhaber: Carl Zeiss Industrielle Messtechnik GmbH, 73447 Oberkochen (DE)
(72) Erfinder: STAADEN, Ulrich, 73431 Aalen (DE); GRUPP, Günter, 89558 Böhmenkirch (DE); AUBELE, Eugen, Aubele, 89558 Böhmenkirch (DE)
(74) Vertreter: Duhme, Torsten
(86) Internationale Anmeldenummer: PCT/EP2006/004641
(87) Internationale Veröffentlichungsnummer: WO 2006/133782

(56) Entgegenhaltungen:
- EP-A- 0 182 394
- DE-A1- 4 107 707
- DE-A1- 10 233 155
- DE-T1- 4 491 093

## Beschreibung

Die vorliegende Erfindung betrifft ein Verfahren zum Bestimmen von Korrekturwerten zum Korrigieren von Positionsmessfehlern bei einer Maschine mit zumindest einer translatorischen Bewegungsachse, insbesondere bei einem Koordinatenmessgerät, wobei die Maschine einen verfahrbaren Kopf, insbesondere eine Aufnahme für einen Tastkopf oder ein Werkzeug, und erste Positionsmesseinrichtungen aufweist, um eine Raumposition des Kopfes zu bestimmen, mit den Schritten:
- Verfahren des Kopfes entlang einer definierten Bewegungsbahn, wobei der Kopf entlang der Bewegungsbahn eine Vielzahl von Positionen einnimmt,
- Aufnehmen einer Vielzahl von ersten Positionsdaten an den Positionen des Kopfes mit Hilfe der ersten Positionsmesseinrichtungen,
- Aufnehmen einer Vielzahl von zweiten Positionsdaten an den Positionen des Kopfes mit Hilfe einer zweiten Positionsmesseinrichtung, und
- Bestimmen einer Vielzahl von Korrekturwerten anhand der ersten und zweiten Positionsdaten, wobei die Korrekturwerte einen von den Positionen des Kopfes abhängigen Fehlerverlauf repräsentieren.

Die Erfindung betrifft ferner eine Maschine, insbesondere ein Koordinatenmessgerät, mit einem entlang von zumindest einer translatorischen Bewegungsachse verfahrbaren Kopf und mit ersten Positionsmesseinrichtungen zum Bestimmen einer Raumposition des Tastkopfes, wobei die ersten Positionsmesseinrichtungen erste Positionsdaten des Kopfes liefern, ferner mit einer Einheit zum Korrigieren der ersten Positionsdaten, wobei die Einheit einen Speicher zum Abspeichern von Korrekturwerten beinhaltet, die einen von den Positionen des Kopfes entlang einer Bewegungsbahn abhängigen Fehlerverlauf repräsentieren.

Ein solches Verfahren und eine solche Maschine sind beispielsweise aus DE 1 638 032 A1 bekannt, die ein Koordinatenmessgerät betrifft.

EP 0 182 394 A2 offenbart ein Verfahren, bei dem eine variable Korrekturwertdichte entlang der Bewegungsbahn eines Maschinenkopfes erhalten wird. Nach diesem Verfahren wird ein momentaner Fehler mit einem zuvor festgelegten, maximal zulässigen Fehlerwert verglichen, um zu entscheiden, ob der lokale Korrekturwert gespeichert wird.

Koordinatenmessgeräte werden typischerweise eingesetzt, um die Objektform eines Messobjekts mit hoher Genauigkeit zu ver-messen. Beispielsweise wird mit Koordinatenmessgeräten die Objektform von Werkstücken zur Qualitätskontrolle überprüft. Das Koordinatenmessgerät besitzt eine Verschiebemechanik, die es ermöglicht, einen sogenannten Tastkopf innerhalb des Messvolumens zu verfahren. Der Tastkopf wird in eine definierte Position zu dem Messobjekt gebracht und anschließend werden die Raumkoordinaten des Messpunktes aus der Stellung des Tastkopfes im Messvolumen bestimmt.

Am Tastkopf ist häufig ein Taststift angeordnet, der dient dazu, den gewählten Messpunkt am Messobjekt anzutasten, um die Bestimmung der Raumkoordinaten auszulösen. Alternativ hierzu gibt es jedoch auch Köpfe, die das Messobjekt berührungslos erfassen, beispielsweise mit optischen Mitteln. Die vorliegende Erfindung ist von der Art der "Antastung" unabhängig. Sie bezieht sich auf alle Koordinatenmessgeräte und darüber hinaus auch auf alle damit verwandten Maschinen, bei denen ein Kopf über eine Verschiebemechanik entlang von zumindest einer translatorischen Bewegungsachse verfahren wird. So ist die Erfindung beispielsweise auch bei Werkzeugmaschinen, Erodiermaschinen oder Robotern anwendbar. Der Kopf ist dann beispielsweise eine Werkzeugaufnahme.

Der Einfachheit halber wird die Erfindung im folgenden jedoch für den bevorzugten Anwendungsfall eines Koordinatenmessgerätes dargestellt, da hier die Anforderungen an die Messgenauigkeit bei der Positionserfassung besonders hoch sind.

Die jeweils aktuelle Raumposition des Kopfes wird bei den bekannten Koordinatenmessgeräten mit Hilfe von sogenannten Maßverkörperungen bestimmt. Häufig handelt es sich hierbei um Glasmaßstäbe, auf denen eine Skala aufgebracht ist. Positionsdaten für die Position des Kopfes werden an den Maßverkörperungen mit Hilfe einer geeigneten Sensorik abgelesen.

Bekanntermaßen ist die Genauigkeit bei der Bestimmung der Raumposition des Kopfes jedoch begrenzt. Mit anderen Worten ist jede Messung mit Messfehlern behaftet. Die Messfehler haben verschiedene Ursachen. Hierzu gehört die begrenzte Genauigkeit, mit der Maßverkörperungen hergestellt werden können. Dies gilt insbesondere bei großen Koordinatenmessgeräten, bei denen die Maßverkörperungen aus mehreren Teilen zusammengesetzt werden müssen. Aber auch bei kleineren Koordinatenmessgeräten wirken sich schon geringe Fertigungstoleranzen bei den Maßverkörperungen auf die Messgenauigkeit des Gerätes aus. Es kommt vor, dass aus einer Vielzahl von "gleichen" Maßverkörperungen nur wenige für die gewünschte Genauigkeit eines Koordinatenmessgerätes geeignet sind. Teilweise stellen sich Mängel bei den Maßverkörperungen erst nach deren Einbau in das Koordinatenmessgerät heraus, was besonders nachteilig ist, da die "schlechten" Maßverkörperungen nachträglich ausgetauscht werden müssen. Die Herstellungskosten eines Koordinatenmessgerätes hängen daher erheblich von der Qualität und den Kosten der Maßverkörperungen ab.

Um die trotzdem verbleibenden Messfehler zu reduzieren, ist es bekannt, Fehler- oder Korrekturtabellen aufzunehmen und in einem Speicher des Koordinatenmessgerätes bereitzustellen. Hierzu wird der Kopf des Koordinatenmessgerätes entlang von definierten Bewegungsbahnen verfahren. Dabei werden die Positionen des Kopfes sowohl mit den Positionsmesseinrichtungen des Koordinatenmessgerätes selbst als auch mit zweiten Positionsmesseinrichtungen aufgenommen. Als zweite Positionsmesseinrichtungen in diesem Sinne dienen üblicherweise Laserinterferometer und sogenannte Neigungswaagen. Die Positionsdaten dieser zweiten Positionsmesseinrichtungen werden als "wahre" Positionsdaten angenommen, und aus dem Vergleich mit den ersten Positionsdaten des Koordinatenmessgerätes werden Korrekturwerte ermitteln. Diese Korrekturwerte werden bei den Messungen berücksichtigt. Ein solches Verfahren ist beispielsweise in der eingangs genannten DE 1 638 032 A1 beschrieben.

Die Genauigkeit dieser Fehlerkorrektur hängt unter anderem davon ab, wie "feinmaschig" das Netz der Korrekturwerte ist. Je größer die Abstände sind, an denen Korrekturwerte bestimmt werden, desto eher besteht die Möglichkeit, dass positionsspezifische Fehler (sogenannte kurzperiodische Fehler) nicht erkannt und dementsprechend nicht korrigiert werden. Für eine hohe Genauigkeit ist daher ein "feinmaschiges" Netz an Korrekturwerten wünschenswert.

Die Bestimmung entsprechend vieler Korrekturwerte ist jedoch zeitaufwändig, insbesondere bei großen Koordinatenmessgeräten, wie sie beispielsweise eingesetzt werden, um ganze Kraftfahrzeuge zu vermessen. Darüber hinaus benötigen große Korrekturwerttabellen viel Speicherplatz in der Steuer- und Auswerteeinheit des Koordinatenmessgerätes. Beide Faktoren tragen zu hohen Herstellungskosten bei.

Andererseits sind gerade große Koordinatenmessgeräte mit zusammengesetzten Maßverkörperungen besonders anfällig für positionsspezifische Fehler, insbesondere an den Stoßstellen der mehrteiligen Maßstäbe. Es gibt eine Reihe von Vorschlägen, um solche Fehler zu vermeiden oder zumindest zu reduzieren.

Einen breiteren Überblick über den Stand der Technik gibt hier die DE 197 24 732 A1, die einen modular aufgebauten Maßstab beschreibt, bei dem die Stoßstellen des zusammengesetzten Maßstabes so gelegt sind, dass sie möglichst weit entfernt von den Stoßstellen eines dazugehörigen Trägerkörpers liegen. Hier wird also versucht, die Qualität von zusammengesetzten Maßstäben zu verbessern.

In DE 101 62 849 A1 ist vorgeschlagen, einen Maßstab, der kürzer ist als das Messvolumen, relativ zur Position von mehreren, voneinander beabstandeten Sensoren zu bewegen, wobei jeweils einer der Sensoren für die Messung ausgewählt wird. Nachteil dieses Vorschlages ist es, dass eine Vielzahl von Sensoren benötigt wird, was entsprechend teuer ist. Auch DE 196 21 015 C2 schlägt vor, die Genauigkeit im Bereich von Stoßstellen eines zusammengesetzten Maßstabes dadurch zu erhöhen, dass mehrere Sensoren verwendet werden. Des Weiteren ist es bekannt, die Stoßstellen von Maßstäben durch spezielle Codefelder zu kennzeichnen (DE 38 18 044 A1) oder Einstellschrauben vorzusehen, mit denen der Abstand der Maßstabsteile im Bereich einer Stoßstelle justiert werden kann (DE 27 27 769 C2). In allen Fällen erhöht der zusätzliche Aufwand die Herstellungskosten des Koordinatenmessgerätes.

Vor diesem Hintergrund ist es eine Aufgabe der vorliegenden Erfindung, ein Verfahren anzugeben, das eine Reduzierung der Herstellungskosten eines Koordinatenmessgerätes ermöglicht, ohne dass sich dies nachteilig auf die Messgenauigkeit auswirkt. Es ist ferner eine Aufgabe, ein entsprechendes Koordinatenmessgerät anzugeben.

Gemäß einem Aspekt der Erfindung wird diese Aufgabe durch ein Verfahren der eingangs genannten Art gelöst, bei dem für jeden Abschnitt der Bewegungsbahn eine definierte Anzahl von Korrekturwerten bestimmt wird, wobei die definierte Anzahl in jedem Abschnitt der Bewegungsbahn in Abhängigkeit von dem Fehlerverlauf variiert.

Ein erfindungsgemäßes Koordinatenmessgerät, allgemeiner eine erfindungsgemäße Maschine, besitzt eine Einheit zum Korrigieren der ersten Positionsdaten, wobei die Einheit dazu ausgebildet ist, für jeden Abschnitt der Bewegungsbahn eine definierte Anzahl von Korrekturwerten abzuspeichern und wobei die definierte Anzahl für jeden Abschnitt der Bewegungsbahn in Abhängigkeit von dem Fehlerverlauf variiert.

Die vorliegende Erfindung geht damit den an sich bekannten Weg, Korrekturwerte bereitzustellen, um Positionsmessfehler rechnerisch zu korrigieren. Dadurch ist die Messgenauigkeit des neuen Koordinatenmessgerätes nicht mehr unmittelbar von der Qualität der Maßverkörperungen abhängig. Die vorliegende Erfindung ermöglicht es daher, auch qualitativ schlechtere Maßstäbe einzusetzen, wodurch die Herstellungskosten gesenkt werden können. Auch ein späterer Austausch eines "schlechten" Maßsta-Auch ein späterer Austausch eines "schlechten" Maßstabes ist nicht mehr notwendig.

Andererseits löst sich die vorliegende Erfindung von dem bislang praktizierten Ansatz, wonach Korrekturwerte stets in gleichmäßigen Abständen bestimmt werden. Die Erfindung geht stattdessen den Weg, die Anzahl der Korrekturwerte (genauer: die Korrekturwertdichte) dem tatsächlichen Fehlerverlauf anzupassen. Ist der Fehlerverlauf relativ gleichmäßig, kann der Abstand der Korrekturwerte (genauer: der Abstand zwischen zwei Positionen, an denen Korrekturwerte bestimmt werden) relativ groß sein. Besitzt der Fehlerverlauf hingegen starke Schwankungen, ist es vorteilhaft, den Abstand der Korrekturwerte entsprechend klein zu wählen. Insbesondere werden mit dem neuen Verfahren relativ viele, dicht beieinander liegende Korrekturwerte dort bestimmt, wo positionsspezifische Fehler auftreten, beispielsweise an Stoßstellen von mehrteiligen Maßstäben. Abseits von positionsspezifischen Fehlern kann der Abstand der Korrekturwerte dagegen größer gewählt werden, das heißt in dem entsprechenden Abschnitt der Bewegungsbahn wird nur eine geringere Anzahl von Korrekturwerten benötigt.

Die vorliegende Erfindung verwendet also nur dort ein feinmaschiges Netz an Korrekturwerten, wo dies auch tatsächlich zur Erhöhung der Messgenauigkeit beiträgt. In Bereichen, wo ein feinmaschiges Netz von Korrekturwerten die Messgenauigkeit nicht nennenswert verbessert, wird die Anzahl der Korrekturwerte demgegenüber reduziert. Infolge dessen ermöglicht die vorliegende Erfindung, die Größe der Korrekturwerttabellen zu reduzieren, ohne dass die Messgenauigkeit des Koordinatenmessgerätes verschlechtert wird. Darüber hinaus kann die Zeit, die zur Aufnahme und Bestimmung der Korrekturwerte benötigt wird, deutlich reduziert werden und es können trotzdem Maßverkörperungen mit größeren Fertigungstoleranzen eingesetzt werden.

Die vorliegende Erfindung ermöglicht also einerseits die Verwendung von billigeren Maßverkörperungen. Andererseits wird die Zeit, die zur Aufnahme einer geeigneten Korrekturwerttabelle benötigt wird, deutlich reduziert. Beide Faktoren tragen dazu bei, die Herstellungskosten eines Koordinatenmessgerätes zu senken, ohne dass dessen Messgenauigkeit herabgesetzt wird. Die genannte Aufgabe ist daher vollständig gelöst.

In einer bevorzugten Ausgestaltung der Erfindung werden positionsspezifische Fehler anhand des Fehlerverlaufs ermittelt und in einem Abschnitt mit einem positionsspezifischen Fehler werden mehr Korrekturwerte bestimmt als in einem Abschnitt ohne positionsspezifischen Fehler.

In dieser Ausgestaltung wird der Fehlerverlauf gezielt nach positionsspezifischen Fehlern analysiert und die Anzahl der Korrekturwerte wird im Bereich eines solchen Fehlers erhöht. Die Ausgestaltung besitzt den Vorteil, dass positionsspezifische Fehler nicht nur an bekannten Stoßstellen eines mehrteiligen Maßstabes, sondern generell berücksichtigt werden. So können auch Fertigungstoleranzen zwischen den Enden eines Maßstabes erkannt und korrigiert werden. Die Genauigkeit des neuen Koordinatenmessgerätes ist daher über den gesamten Messbereich gleichmäßig hoch.

In einer weiteren Ausgestaltung werden die ersten und zweiten Positionsdaten im Bereich eines positionsspezifischen Fehlers mit geringeren relativen Abständen aufgenommen als abseits eines positionsspezifischen Fehlers.

Diese Ausgestaltung knüpft an die vorhergehende Ausgestaltung an, indem die ersten und zweiten Positionsdaten im Bereich eines positionsspezifischen Fehlers mit einer höheren Datendichte (Stützstellendichte) aufgenommen werden. Es stehen somit feiner aufgelöste Positionsdaten zur Verfügung, um die Korrekturwerte mit einer entsprechend feineren Auflösung zu bestimmen. Alternativ hierzu wäre es jedoch auch möglich, die erhöhte Anzahl an Korrekturwerten im Bereich eines positionsspezifischen Fehlers durch intelligente Interpolationsverfahren, beispielsweise mit Hilfe einer Spline-Interpolation zu erhalten.

In einer weiteren Ausgestaltung werden im Bereich eines positionsspezifischen Fehlers ergänzende erste und zweite Positionsdaten aufgenommen, um ergänzende Korrekturwerte zu bestimmen.

In dieser Ausgestaltung wird die höhere Stützstellendichte im Bereich eines positionsspezifischen Fehlers dadurch realisiert, dass im Bereich des Fehlers gezielt weitere Positionsdaten aufgenommen werden. Diese Ausgestaltung ermöglicht es, zunächst Positionsdaten für den gesamten Messbereich relativ schnell aufzunehmen. Nur dort, wo es sinnvoll ist, werden dann ergänzende Daten aufgenommen, beispielsweise in einem zweiten Durchgang, in dem der Kopf nochmals gezielt in den Bereich eines erkannten positionsspezifischen Fehlers verfahren wird. Diese Ausgestaltung ist besonders effizient und bietet eine hohe, gleichmäßige Genauigkeit.

In dem letztgenannten Fall ist es besonders bevorzugt, wenn der Kopf zunächst an äquidistante Raumpositionen verfahren wird und dort jeweils erste und zweite Positionsdaten aufgenommen werden. Die dann erhaltene Fehlerkurve wird anschließend auf positionsspezifische Fehler untersucht. Dort, wo solche Fehler erkannt werden, wird der Kopf ein zweites Mal hingefahren und es werden die ergänzenden ersten und zweiten Positionsdaten mit geringeren relativen Abständen aufgenommen. Damit wird eine besonders schnelle und trotzdem genaue Bestimmung von Korrekturwerten ermöglicht.

In einer weiteren Ausgestaltung wird ein positionsspezifischer Fehler jeweils dort angenommen, wo der Fehlerverlauf eine Verlaufsänderung aufweist, die wesentlich stärker ist als eine mittlere Verlaufsänderung.

Diese Ausgestaltung beinhaltet einen besonders einfachen Weg, um positionsspezifische Fehler unabhängig von der Fehlerursache zu identifizieren. Insbesondere lassen sich damit positionsspezifische Fehler identifizieren, die an unbekannten Stellen auftreten, beispielsweise abseits von Stoßstellen.

In einer weiteren Ausgestaltung werden die benachbarten Korrekturwerte miteinander verglichen, um positionsspezifische Fehler zu identifizieren.

Diese Ausgestaltung beruht auf einem Vergleich der Korrekturwerte miteinander, um die positionsspezifischen Fehler zu identifizieren, was relativ einfach zu realisieren ist.

In einer besonders bevorzugten Ausgestaltung werden die zunächst erhaltenen Korrekturwerte in einem ersten Verarbeitungsschritt geglättet, was beispielsweise mit einem FIR-Filter erfolgen kann. Anschließend wird die Steigung des geglätteten Fehlerverlaufs untersucht, was mathematisch der Auswertung der Ableitung des Fehlerverlaufs entspricht. Auf diese Weise lassen sich lokale Ausschläge des Fehlerverlaufs sehr genau lokalisieren.

In einer anderen bevorzugten Ausgestaltung wird überprüft, ob die einzelnen Korrekturwerte innerhalb eines gleitenden Fensters liegen, wobei die Breite und Höhe des Fensters so an den Verlauf der Korrekturwerte angepasst wird, dass sich lokale Ausreißer schnell zeigen.

In einer weiteren, ebenfalls bevorzugten Ausgestaltung wird der Fehlerverlauf einer Frequenzanalyse unterzogen, wobei ein positionsspezifischer Fehler angenommen wird, wenn der Fehlerverlauf eine Ortsfrequenz aufweist, die höher ist als eine definierte Referenzfrequenz. Besonders bevorzugt erfolgt die Frequenzanalyse abschnittweise, da das Auftreten einer hohen Ortsfrequenz in einem Abschnitt der Bewegungsbahn darauf hindeutet, dass in diesem Abschnitt ein positionsspezifischer Fehler vorliegt.

Eine Frequenzanalyse ist eine sehr schnelle und effektive Möglichkeit, um festzustellen, ob der Fehlerverlauf positionsspezifische Ausschläge aufweist. Ein besonderer Vorteil ist, dass hierbei sehr schnell festgestellt werden kann, ob in dem Fehlerverlauf überhaupt positionsspezifische Fehler auftreten.

Besonders bevorzugt ist es, wenn die Frequenzanalyse mit Hilfe einer Fourieranalyse des Fehlerverlaufs und/oder mit Hilfe von Filterelementen erfolgt, an deren Ausgang ein Schwellenwertentscheider angeordnet ist.

Mit diesen beiden Möglichkeiten kann der Fehlerverlauf sehr schnell und automatisiert auf das Vorhandensein von hohen Ortsfrequenzen untersucht werden, so dass sich positionsspezifische Fehler entsprechend schnell erkennen lassen.

In einer weiteren Ausgestaltung der Erfindung wird der Kopf entlang der Bewegungsbahn kontinuierlich verfahren, wobei die ersten und zweiten Positionsdaten zeitgleich aufgenommen werden.

Mit dieser Ausgestaltung werden die ersten und zweiten Positionsdaten mit einer hohen Stützstellendichte und trotzdem relativ schnell aufgenommen. Damit ist diese Ausgestaltung besonders geeignet, um ein feinmaschiges Netz von Korrekturwerten zu bestimmen.

In einer alternativen Ausgestaltung wird der Kopf entlang der Bewegungsbahn schrittweise verfahren, wobei die ersten und zweiten Positionsdaten jeweils aufgenommen werden, wenn der Kopf anhält.

Diese Ausgestaltung erfordert gegenüber der zuvor genannten Alternative mehr Zeit beim Durchfahren der Bewegungsbahn. Andererseits ist es hier einfacher, die Aufnahme der ersten und zweiten Positionsdaten zu synchronisieren. Diese Ausgestaltung ist daher besonders dann bevorzugt, wenn eine genaue Synchronisierung der ersten und zweiten Positionsmesseinrichtungen einen hohen Aufwand darstellt.

In einer weiteren Ausgestaltung der Erfindung werden die Korrekturwerte in einer Korrekturwertdatei abgespeichert, wobei die Anzahl der abgespeicherten Korrekturwerte in Abhängigkeit von dem Fehlerverlauf variiert.

Diese Ausgestaltung ist besonders bevorzugt, wenn der Kopf entlang der Bewegungsbahn kontinuierlich verfahren wird, sie kann jedoch auch bei schrittweisem Verfahren eingesetzt werden. Mit dieser Ausgestaltung wird die Größe der Korrekturwertdatei reduziert, und zwar vor allem dann, wenn sich nach der Aufnahme der ersten und zweiten Positionsdaten zeigt, dass die damit vorhandene Stützstellendichte nicht benötigt wird. Diese Ausgestaltung eignet sich vor allem für ältere oder kostengünstige Koordinatenmessgeräte mit begrenztem Speicherplatz.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: ein Ausführungsbeispiel eines Koordinatenmessgerätes mit der neuen Messwertkorrektur,
- Figur 2: eine vereinfachte Darstellung eines Fehlerverlaufs bei dem Koordinatenmessgerät aus Figur 1,
- Figur 3: ein schematisches Flussdiagramm zur Erläuterung eines ersten Ausführungsbeispiels des erfindungsgemäßen Verfahrens, und
- Figur 4: ein schematisches Flussdiagramm zur Erläuterung eines zweiten Ausführungsbeispiels des erfindungsgemäßen Verfahrens.

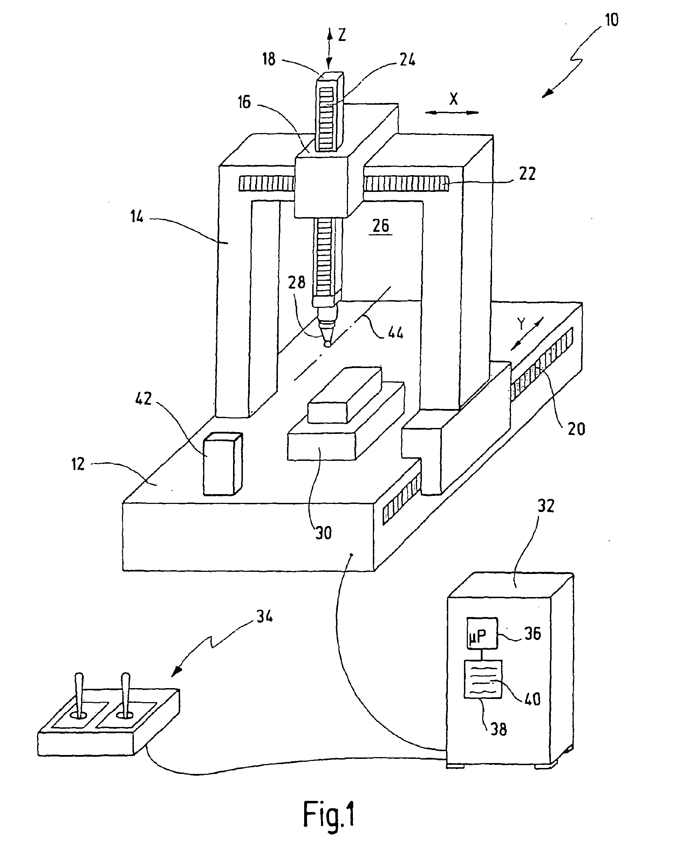

In Figur 1 ist ein Ausführungsbeispiel eines Koordinatenmessgerätes in seiner Gesamtheit mit der Bezugsziffer 10 bezeichnet. Das Koordinatenmessgerät 10 ist hier in Portalbauweise dargestellt. Die Erfindung ist hierauf jedoch nicht beschränkt und kann ebenso bei Koordinatenmessgeräten anderer Bauart verwendet werden, beispielsweise bei Koordinatenmessgeräten mit einem horizontalen Ausleger. Darüber hinaus kann die Erfindung, wie bereits eingangs erwähnt, auch bei allen anderen Maschinen eingesetzt werden, bei denen ein Kopf entlang von zumindest einer translatorischen Bewegungsbahn verfahren wird und bei denen die Positionen den Kopfes bestimmt werden müssen.

Das Koordinatenmessgerät 10 besitzt eine Basis 12, auf der ein Portal 14 verfahrbar angeordnet ist. Die Verfahrrichtung des Portals 14 wird beispielsweise als Y-Achse bezeichnet. Auf der Traverse des Portals 14 ist ein Schlitten 16 angeordnet, der in X-Richtung verfahrbar ist. An dem Schlitten 16 sitzt eine in Z-Richtung verfahrbare Pinole 18. Mit den Bezugsziffern 20, 22, 24 sind Maßverkörperungen bezeichnet, hier in Form von Glasmaßstäben. Bezugsziffer 26 bezeichnet das Messvolumen, in dem der Tastkopf 28 des Koordinatenmessgerätes 10 verfahren werden kann.

Innerhalb des Messvolumens 26 ist symbolisch ein Messobjekt 30 dargestellt, das mit dem Koordinatenmessgerät 10 vermessen werden soll.

Bei der Bezugsziffer 32 ist eine Auswerte- und Steuereinheit dargestellt, die die Verfahrbewegungen des Tastkopfes 28 entlang der drei Koordinatenachsen X, Y und Z steuert und außerdem die Raumkoordinaten eines angetasteten Messpunktes bestimmt. Die Verfahrbewegungen des Tastkopfes 28 können wahlweise manuell gesteuert werden, wozu ein Bedienpult 34 vorgesehen ist, oder auch automatisch mit Hilfe der Steuereinheit 32 durchgeführt werden.

Die Steuereinheit 32 beinhaltet einen Prozessor 36 und zumindest einen Speicher 38, in dem ein Betriebs- und Auswerteprogramm sowie Korrekturwerte 40 abgespeichert sind. Mit Hilfe der Korrekturwerte 40 korrigiert die Auswerte- und Steuereinheit 32 Messfehler, die auf Ungenauigkeiten der Maßstäbe 20, 22, 24 und auf anderen Fehlerursachen beruhen.

Bei der Bezugsziffer 42 ist ein Laserinterferometer vereinfacht dargestellt, das nur beim Einmessen des Koordinatenmessgerätes 10 benötigt wird. Mit Hilfe des Laserinterferometers 42 lässt sich die Position des Tastkopfes 28 im Messvolumen 26 genau bestimmen. Die erhaltenen Positionsdaten (zweite Positionsdaten im Sinne der vorliegenden Erfindung) werden mit den (ersten) Positionsdaten verglichen, die die Auswerte- und Steuereinheit 32 von den geräteeigenen Maßstäben 20, 22, 24 erhält. Aus der jeweiligen Differenz werden Korrekturwerte berechnet, die im Speicher 38 hinterlegt werden. Die Aufnahme der ersten und zweiten Positionsdaten erfolgt, wenn der Kopf 28 entlang von definierten Bewegungsbahnen verfahren wird. Beispielhaft ist hier eine Bewegungsbahn bei Bezugsziffer 44 angedeutet.

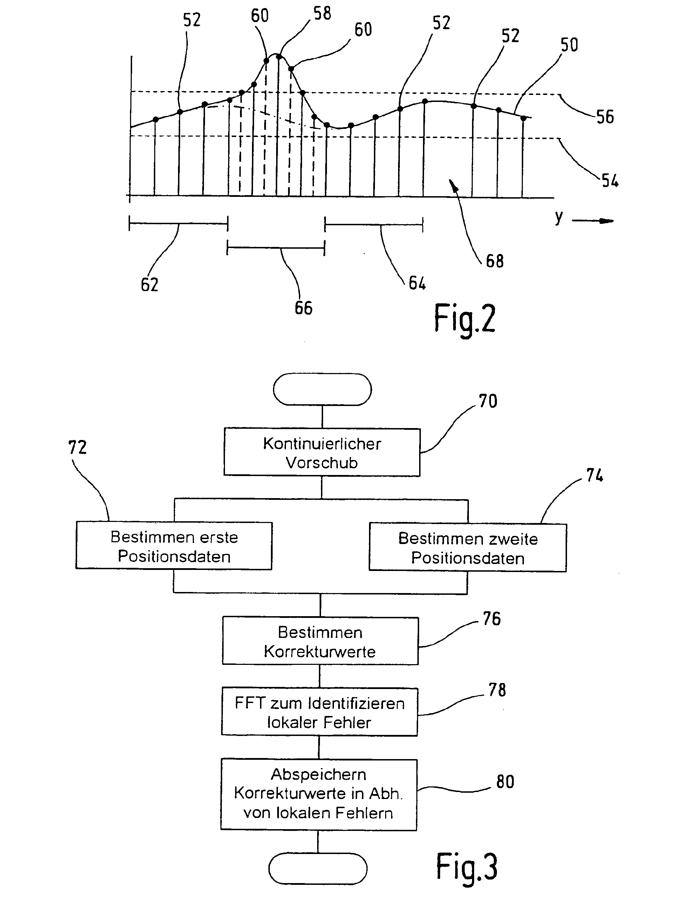

In Figur 2 ist ein Fehlerverlauf 50 vereinfacht dargestellt, der sich ergibt, wenn man die einzelnen Korrekturwerte 52 mit einem interpolierenden Spline miteinander verbindet. Der Fehlerverlauf 50 ist hier über der Y-Achse dargestellt, was einer Verfahrbewegung des Kopfes 28 entlang der Bewegungsbahn 44 entspricht. Es versteht sich jedoch, dass die vorliegende Erfindung nicht auf einen eindimensionalen Fehlerverlauf beschränkt ist, sondern auch bei Korrekturwerten angewendet werden kann, die entlang von orthogonalen Bewegungsachsen aufgenommen werden.

Mit zwei gestrichelten Linien 54, 56 ist ein Korrekturwertintervall angedeutet, in dem die Mehrzahl der Korrekturwerte 52 liegt. Der Korrekturwert 58 und einige benachbarte Korrekturwerte liegen jedoch außerhalb dieses Fehlerintervalls. Mit anderen Worten besitzt der Fehlerverlauf 50 bei Bezugsziffer 58 einen lokalen Ausreißer, der auf einen positionsspezifischen Fehler, beispielsweise auf eine Stoßwelle an dem entsprechenden Maßstab 20, 22, 24, hindeutet.

Nach der vorliegenden Erfindung werden daher im Speicher 38 der Auswerte- und Steuereinheit 32 Korrekturwerte mit einer höheren Korrekturwertdichte (geringere räumliche Abstände voneinander) abgespeichert, was in Figur 2 anhand von ergänzenden Korrekturwerten 60 dargestellt ist. Aufgrund der engeren Abstände der Korrekturwerte 58, 60 erhält man hier eine feinere Auflösung, was letztlich zu einer höheren Genauigkeit im Bereich um den positionsspezifischen Fehler führt.

Mit anderen Worten ist die Anzahl der Korrekturwerte 52, 60 in jedem Abschnitt der Bewegungsbahn 44 von dem Fehlerverlauf 50 abhängig. In den Abschnitten 62 und 64 ist die Korrekturwertdichte hier nur halb so groß wie im Abschnitt 66. Darüber hinaus kann die Anzahl der Korrekturwerte auch noch weiter variieren, was beispielhaft dargestellt ist, indem bei der Bezugsziffer 68 ein Korrekturwert fehlt. Dieser ist aufgrund des relativ linearen Verlaufs und aufgrund der geringen Unterschiede der benachbarten Korrekturwerte nicht erforderlich. Ggf. kommt man mit einer Interpolation zu einem gleichwertigen Ergebnis.

Figur 3 zeigt ein erstes Ausführungsbeispiel zur Erläuterung des neuen Verfahrens. Der Kopf 28 wird in diesem Fall kontinuierlich entlang der Bewegungsbahn 44 verfahren (Schritt 70). Zeitgleich werden die ersten und zweiten Positionsdaten aufgenommen (Bezugsziffern 72, 74). Anschließend werden die Korrekturwerte aus der Differenz der Positionsdaten bestimmt (Bezugsziffer 76). Die Vielzahl der Korrekturwerte ergibt einen Fehlerverlauf, wie er in Figur 2 bei Bezugsziffer 50 vereinfacht dargestellt ist.

Dieser Fehlerverlauf kann nun analysiert werden, um positionsspezifische Fehler zu identifizieren. Bei dem in Figur 3 dargestellten Ausführungsbeispiel erfolgt dieser Schritt mit Hilfe einer Fourieranalyse, beispielsweise mit einer FFT (Fast Fourier Transformation), die abschnittsweise über den Abschnitten 62, 64, 66 durchgeführt wird. (Eine FFT erfordert dabei 2^{N} äquidistante Messwerte.)

Ergibt die Analyse, dass in dem untersuchten Abschnitt relativ hohe Ortsfrequenzen vorhanden sind, deutet dies auf eine starke lokale Schwankung des Fehlerverlaufs hin. Gemäß Schritt 80 erfolgt in diesem Fall ein Abspeichern der Korrekturwerte im Speicher 38 derart, dass im Bereich der identifizierten positionsspezifischen Fehler eine höhere Anzahl an Korrekturwerten abgespeichert wird als abseits davon. Die Größe der Korrekturwertdatei hängt daher vom Fehlerverlauf 50 ab.

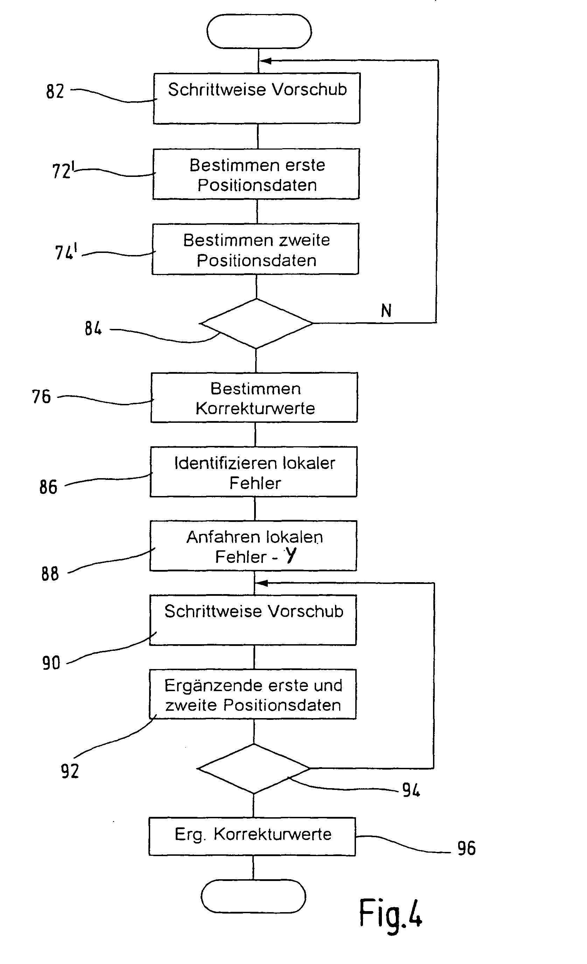

Figur 4 zeigt ein weiteres Ausführungsbeispiel des neuen Verfahrens, wobei der Kopf 28 hier entlang der Bewegungsbahn 44 schrittweise verfahren wird. Bei Bezugsziffer 82 ist ein erster Vorschubschritt dargestellt. Nachdem der Kopf 28 in seiner neuen Position zur Ruhe gekommen ist, werden die ersten Positionsdaten (Bezugsziffer 72) und die zweiten Positionsdaten (74) eingelesen. Bei dieser Vorgehensweise ist es nicht erforderlich, das Aufnehmen der ersten und zweiten Positionsdaten exakt zu synchronisieren.

Bei Bezugsziffer 84 erfolgt eine Entscheidung, ob der Kopf 28 seine vorgesehene Endposition erreicht hat. Wenn dies nicht der Fall ist, wird der Kopf 28 gemäß Schritt 82 erneut um eine definierte Strecke verfahren. Anschließend erfolgt die erneute Aufnahme von ersten und zweiten Positionsdaten.

Wenn alle ersten und zweiten Positionsdaten eingelesen sind, kann die Bestimmung der Korrekturwerte gemäß Schritt 76 erfolgen. Anschließend werden die positionsspezifischen Fehler gesucht (Bezugsziffer 86). Beispielsweise erfolgt die Suche der positionsspezifischen Fehler in diesem Fall, indem die Korrekturwerte aus Schritt 76 mit einem FIR-Filter geglättet werden, um statistische Schwankungen (Rauschen) zu unterdrücken. Im Anschluss daran wird der geglättete Kurvenverlauf auf starke Steigungen und/oder Krümmungen untersucht.

In einem alternativen Ausführungsbeispiel wird ein Fenster mit einer Länge von beispielsweise 10 Korrekturwerten und einer Höhe, wie sie in Figur 2 mit Hilfe der Linien 54, 56 dargestellt ist, gleitend über die Vielzahl der Korrekturwerte geschoben. Die Höhe des Fensters kann auch gleitend an den Verlauf der Korrekturwerte angepasst werden. Treten einzelne Korrekturwerte aus dem Fenster heraus, wie beispielsweise der Korrekturwert 58 in Figur 2, deutet dies auf einen positionsspezifischen Fehler hin.

In einer weiteren Alternative kann der Fehlerverlauf 50 mit einem Filter gefiltert werden, insbesondere einem digitalen Filter. Das Filter ist so eingestellt, dass hohe Frequenzen und/oder spezifische Frequenzen für bestimmte Fehlerursachen durchgelassen werden, während "normale" Veränderungen des Fehlerverlaufs 50 unterdrückt werden. Am Ausgang des Filters ist ein Schwellenwertentscheider (hier nicht dargestellt) angeordnet, der ein Signal abgibt, wenn der Fehlerverlauf 50 die entsprechenden Frequenzen beinhaltet.

Das Ergebnis dieser Frequenzanalyse ist in etwa mit der Fourieranalyse vergleichbar, die bei dem Ausführungsbeispiel in Figur 3 erwähnt wurde.

Wenn ein positionsspezifischer Fehler erkannt wurde, wird der Kopf 28 an eine Stelle verfahren, die um einige Positionswerte Y vor dem erkannten Fehler liegt (Bezugsziffer 88). Von hier aus erfolgt wiederum ein schrittweiser Vorschub des Kopfes 28 (Bezugsziffer 90). Nach jedem Stopp des Kopfes 28 werden ergänzende erste und zweite Positionsdaten eingelesen (Bezugsziffer 92). Bei Bezugsziffer 94 erfolgt eine Abfrage, ob alle ergänzenden Positionsdaten aufgenommen wurden. Wenn dies nicht der Fall ist, wird der Kopf 28 wieder vorgeschoben. Andernfalls erfolgt die Bestimmung der ergänzenden Korrekturwerte (Bezugsziffer 96) anhand der ergänzenden ersten und zweiten Positionsdaten.

## Patentansprüche

1. Verfahren zum Bestimmen von Korrekturwerten (52, 60) zum Korrigieren von Positionsmessfehlern bei einer Maschine mit zumindest einer translatorischen Bewegungsachse (X, Y, Z), insbesondere bei einem Koordinatenmessgerät (10), wobei die Maschine, einen verfahrbaren Kopf (28) und erste Positionsmesseinrichtungen (20, 22, 24) aufweist, um eine Raumposition des Kopfes (28) zu bestimmen, wobei die ersten Positionsmesseinrichtungen (20, 22, 24) einen Messbereich definieren, mit den Schritten:
- verfahren des Kopfes (28) entlang einer definierten Bewegungsbahn (44), wobei der Kopf (28) entlang der Bewegungsbahn (44) eine Vielzahl von Positionen einnimmt, und wobei die definierte Bewegungsbahn (44) in eine Anzahl von Abschnitten (62, 64, 66) unterteilbar ist,
- Aufnehmen (72; 72') einer Vielzahl von ersten Positionsdaten an den Positionen des Kopfes (28) mit Hilfe der ersten Positionsmesseinrichtungen (20, 22,24),
- Aufnehmen (74; 74') einer Vielzahl von zweiten Positionsdaten an den Positionen des Kopfes (28) mit Hilfe einer zweiten Positionsmesseinrichtung (42), und
- Bestimmen einer Vielzahl von Korrekturwerten (52, 60) anhand der ersten und zweiten Positionsdaten, wobei die Korrekturwerte (52, 60) einen von den Positionen des Kopfes (28) abhängigen Fehlerverlauf (50) repräsentieren,
- wobei für jeden Abschnitt (62, 64, 66) der Bewegungsbahn (44) eine definierte Anzahl von Korrekturwerten (52, 60) bestimmt wird, und wobei die definierte Anzahl in jedem Abschnitt (62, 64, 66) der Bewegungsbahn in Abhängigkeit von dem Fehlerverlauf (50) variiert,
**dadurch gekennzeichnet, dass** zunächst erste und zweite Positionsdaten für den gesamten Messbereich aufgenommen werden, dass anhand des dann erhaltenen Fehlerverlaufs (50) positionsspezifische Fehler (58) ermittelt werden und dass in einem Abschnitt (66) mit einem positionsspezifisichen Fehler (58) ergänzende erste und zweite Positionsdaten aufgenommen werden, um ergänzende Korrekturwerte (60) zu bestimmen, indem der Kopf (28) nochmals gezielt in den Bereich eines erkannten positionsspezifichen Fehlers (58) verfahren wird.

2. Verfahren nach Anspruch 1, **dadurch gekennzeichnet, dass** der Kopf (28) zunächst an äquidistante Raumpositionen verfahren wird und dort jeweils die ersten und zweiten Positionsdaten aufgenommen werden und dass die dann erhaltens Fehlerkurve anschließend auf die positionsspeéifischen Messfehler untersucht wird.

3. Verfahren nach Anspruch 1 oder 2, **dadurch gekennzeichnet, dass** ein positionsspezifischer Fehler (58) jeweils dort angenommen wird, wo der Fehlerverlauf (50) eine Verlaufsänderung aufweist, die stärker ist als eine mittlere Verlaufsänderung (54, 56).

4. Verfahren nach einem der Ansprüche 1 bis 3, **dadurch gekennzeichnet, dass** benachbarte Korrekturwerte miteinander verglichen werden, um positionsspezifische Fehler (58) zu identifizierten.

5. Verfahren nach einem der Ansprüche 1 bis 4, **dadurch gekennzeichnet, dass** der Fehlerverlauf (50) einer Frequenzanalyse (78) unterzogen wird, wobei ein positionsspezifischer Fehler (58) angenommen wird, wenn der Fehlerverlauf (50) eine Ortsfrequenz aufweist, die höher ist als eine definierte Referenzfrequenz.

6. Verfahren nach Anspruch 5, **dadurch gekennzeichnet, dass** die Frequenzanalyse (78) mit Hilfe einer Fourieranalyse des Fehlerverlaufs und/oder mit Hilfe von Filterelementen erfolgt, an deren Ausgang ein Schwellenwertentscheider angeordnet ist.

7. Verfahren nach einem der Ansprüche 1 bis 6, **dadurch gekennzeichnet, dass** der Kopf (28) entlang der Bewegungsbahn (44) kontinuierlich verfahren wird, wobei die ersten und zweiten Positionsdaten (72, 74) zeitgleich aufgenommen werden.

8. Verfahren nach einem der Ansprüche 1 bis 6, **dadurch gekennzeichnet, dass** der Kopf (28) entlang der Bewegungsbahn schrittweise verfahren wird, wobei die ersten und zweiten Positionsdaten (72', 74') jeweils aufgenommen werden, wenn der Kopf (28) anhält

9. Verfahren nach einem der Ansprüche 1 bis 8, **dadurch gekennzeichnet, dass** die Korrekturwerte (52, 60) in einer Korrekturwertdatei (40) abgespeichert werden, wobei die Anzahl der abgespeicherten Korrekturwerte (52, 60) in Abhängigkeit von dem Fehlerverlauf (50) variiert.

10. Computerprogrammprodukt mit Programmcode, der dazu ausgebildet ist, ein Verfahren nach einem der Ansprüche 1 bis 9 auszuführen, wenn der Programmcode auf einem Computer ausgeführt wird.

## Claims

1. A method for determining correction values (52, 60) for correcting positional measurement errors in a machine having at least one translational axis of movement (X, Y, Z), in particular in a coordinate measuring machine (10), the machine having a mobile head (28) and first position measuring devices (20, 22, 24) in order to determine a spatial position of the head (28), and the first position measuring devices (20, 22, 24) defining a measuring range, the method comprising the steps of:
- moving the head (28) along a defined path of movement (44), the head (28) assuming a plurality of positions along the path of movement (44), and the defined path of movement (44) being configured to be subdivided into a number of sections (62, 64, 66),
- recording (72; 72') a plurality of first position data at the positions of the head (28) by means of the first position measuring devices (20, 22, 24),
- recording (74; 74') a plurality of second position data at the positions of the head (28) by means of a second position measuring device (42), and
- determining a plurality of correction values (52, 60) by means of the first and second position data, with the correction values (52, 60) representing an error profile (50) dependent on the positions of the head (28),
- wherein a defined number of correction values (52, 60) is determined for each section (62, 64, 66) of the path of movement (44), with the defined number varying in each section (62, 64, 66) of the path of movement as a function of the error profile (50),
**characterized in that** first and second position data are recorded for the entire measuring range at first, position-specific errors (58) are determined by means of the error profile (50) obtained, and supplementary first and second position data are recorded in a section (66) with a position-specific error (58) in order to determine supplementary correction values (60) by once again moving the head (28) into the region of a detected position-specific error (58).

2. The method of Claim 1, **characterized in that** the head (28) is firstly moved to equidistant spatial positions and the first and second position data are respectively recorded there, and the error curve then obtained is subsequently examined for the position-specific measurement error.

3. The method of Claim 1 or 2, **characterized in that** a position-specific error (58) is assumed wherever the error profile (50) exhibits a profile change which is stronger than an average profile change (54, 56).

4. The method of to one of Claims 1 to 3, **characterized in that** neighboring correction values are compared in order to identify position-specific errors (58).

5. The method of one of Claims 1 to 4, **characterized in that** the error profile (50) is subjected to a frequency analysis (78), a position-specific error (58) being assumed when the error profile (50) exhibits a spatial frequency which is higher than a defined reference frequency.

6. The method of Claim 5, **characterized in that** the frequency analysis (78) is performed by means of a Fourier analysis of the error profile, and/or by means of filter elements at whose output a threshold decision element is arranged.

7. The method of one of Claims 1 to 6, **characterized in that** the head (28) is moved continuously along the path of movement (44), with the first and second position data (72, 74) being recorded simultaneously.

8. The method of one of Claims 1 to 6, **characterized in that** the head (28) is moved along the path of movement in steps, with the first and second position data (72', 74') respectively being recorded when the head (28) stops.

9. The method of one of Claims 1 to 8, **characterized in that** the correction values (52, 60) are stored in a correction value file (40), with the number of the stored correction values (52, 60) varying as a function of the error profile (50).

10. A computer program product having a program code that is designed to execute a method according to one of Claims 1 to 9 when the program code is executed on a computer.

## Revendications

1. Procédé de détermination de valeurs de correction (52, 60) permettant de corriger des erreurs de mesure de position sur une machine pourvue d'au moins un axe mobile de translation (X, Y, Z), notamment sur un appareil de mesure de coordonnées (10), la machine comprenant une tête déplaçable (28) et des premiers dispositifs de mesure de position (20, 22, 24) afin de déterminer une position spatiale de la tête (28), les premiers dispositifs de mesure de position (20, 22, 24) définissant une gamme de mesure, comprenant les étapes :
- déplacer la tête (28) le long d'une trajectoire mobile (44) définie, la tête (28) occupant le long de la trajectoire mobile (44) une pluralité de positions et la trajectoire mobile (44) définie pouvant être partagée en un nombre de sections (62, 64, 66),
- recueillir (72 ; 72') une pluralité de premières données de position au niveau des positions de la tête (28) à l'aide des premiers dispositifs de mesure de position (20, 22, 24),
- recueillir (74 ; 74') une pluralité de secondes données de position au niveau des positions de la tête (28) à l'aide d'un second dispositif de mesure de position (42), et
- déterminer une pluralité de valeurs de correction (52, 60) au moyen des premières et secondes données de position, les valeurs de correction (52, 60) représentant une courbe d'erreurs (50) dépendante des positions de la tête (28),
- dans lequel pour chaque section (62, 64, 66) de la trajectoire mobile (44), un nombre défini de valeurs de correction (52, 60) est déterminé et le nombre est défini dans chaque section (62, 64, 66) de la trajectoire mobile variant en fonction de la courbe d'erreurs (50),
**caractérisé en ce que** les premières et secondes données de position sont tout d'abord recueillies pour l'ensemble de la gamme de mesure, **en ce que** des erreurs spécifiques à la position (58) sont déterminées au moyen de la courbe d'erreurs (50) obtenue ensuite, et **en ce que** dans une section (66) avec une erreur spécifique à la position (58), des premières et secondes données de position complémentaires sont recueillies, afin de déterminer des valeurs de correction (60) complémentaires, la tête (28) étant une fois de plus déplacée de manière ciblée dans la zone d'une erreur spécifique à la position (58) reconnue.

2. Procédé selon la revendication 1, **caractérisé en ce que** la tête (28) est tout d'abord déplacée au niveau de positions spatiales équidistantes et les premières et secondes données de positions sont alors respectivement recueillies et **en ce que** la courbe d'erreurs ainsi obtenue est ensuite examinée en ce qui concerne les erreurs de mesure spécifiques à la position.

3. Procédé selon la revendication 1 ou 2, **caractérisé en ce qu'**une erreur spécifique à la position (58) est respectivement recueillie à l'endroit où la courbe d'erreurs (50) présente une modification de courbe qui est plus importante qu'une modification de courbe moyenne (54, 56).

4. Procédé selon l'une quelconque des revendications 1 à 3, **caractérisé en ce que** des valeurs de correction voisines sont comparées l'une avec l'autre afin d'identifier des erreurs spécifiques à la position (58).

5. Procédé selon l'une quelconque des revendications 1 à 4, **caractérisé en ce que** la courbe d'erreurs (50) est soumise à une analyse de fréquence (78), une erreur spécifique à la position (58) étant acceptée lorsque la courbe d'erreurs (50) présente une fréquence spatiale qui est plus élevée qu'une fréquence de référence définie.

6. Procédé selon la revendication 5, **caractérisé en ce que** l'analyse de fréquence (78) est réalisée à l'aide d'une analyse de Fourier de la courbe d'erreurs et/ou à l'aide d'éléments de filtre, à la sortie desquels est disposé un dispositif de décision de valeur seuil.

7. Procédé selon l'une quelconque des revendications 1 à 6, **caractérisé en ce que** la tête (28) est déplacée de manière continue le long de la trajectoire mobile (44), les premières et secondes données de position (72, 74) étant recueillies simultanément.

8. Procédé selon l'une quelconque des revendications 1 à 6, **caractérisé en ce que** la tête (28) est déplacée de manière progressive le long de la trajectoire mobile, les premières et secondes données de position (72', 74') étant respectivement recueillies lorsque la tête (28) s'arrête.

9. Procédé selon l'une quelconque des revendications 1 à 8, **caractérisé en ce que** les valeurs de correction (52, 60) sont mémorisées dans un fichier de valeurs de correction (40), le nombre des valeurs de correction (52, 60) mémorisées variant en fonction de la courbe d'erreurs (50).

10. Produit de programme informatique comprenant un code de programme, qui est configuré de manière à réaliser un procédé selon l'une quelconque des revendications 1 à 9 lorsque le code de programme est exécuté sur un ordinateur.
